# EUROPEAN PATENT APPLICATION

(11) **EP 2 775 722 A2**
(43) Date of publication of application: **10.09.2014**
(21) Application number: 14157562.1
(22) Date of filing: 04.03.2014
(51) Int. Cl.: H04N 9/31

(54) **Laser projection device**

(30) Priority: 04.03.2013 JP 2013042358
(71) Applicant: Funai Electric Co., Ltd., Daito-shi, Osaka 574-0013 (JP)
(72) Inventor: Takeda, Kenichi, Daito-shi, Osaka 574-0013 (JP)
(74) Representative: Global IP Europe Patentanwaltskanzlei

(57) **Abstract**

An electronic device includes a laser beam scanner, a light detector, a mirror, and an adjuster. The laser beam scanner is configured to scan a laser beam over a projection surface. The light detector is configured to detect the laser beam that has been scanned by the laser beam scanner and reflected by a detection object. The mirror is arranged to reflect the laser beam that has been reflected by the detection object toward the light detector. The adjuster is arranged to adjust at least one of inclination of the mirror and position of the mirror with respect to the light detector such that incident position of the laser beam on the light detector is adjusted.

## Description

### CROSS-REFERENCE TO RELATED APPLICATIONS

This application claims priority to Japanese Patent Application No. 2013-042358 filed on March 4, 2013. The entire disclosure of Japanese Patent Application No. 2013-042358 is hereby incorporated herein by reference.

### BACKGROUND

### Field of the Invention

This invention generally relates to an electronic device. More specifically, the present invention relates to an electronic device with a projection function.

### Background Information

Generally, a projector with a light detector is well-known in the art (see Japanese Unexamined Patent Application Publication No. 2009-258569 (Patent Literature 1), for example).

The above-mentioned Patent Literature 1 discloses a projector having a projector module and a photodiode. The projector module includes an MEMS mirror that scans a laser beam over a projection surface. The photodiode detects the laser beam that has been scanned by the MEMS mirror and reflected by a detection object, such as a user's finger or a pointer. This projector also includes an infrared laser, a reflecting mirror, and a beam splitter. The infrared laser is used for detecting the detection object. The reflecting mirror reflects the laser beam emitted from the infrared laser such that the reflected light is parallel to the projection surface. The beam splitter causes the laser beam reflected by the detection object to be incident on the photodiode. Also, this projector is configured such that the laser beam reflected by the detection object is incident on the photodiode, and based on this, it is detected that the user has made an input to an operation key (e.g., operation button) projected on the projection surface.

### SUMMARY

However, it has been discovered that with the above-mentioned projector, the laser beam reflected by the detection object sometimes cannot be properly incident on the photodiode due to the precision (assembly precision) of the layout of the optical system, such as the reflecting mirror and the photodiode. When this happened, the projector need to be taken apart such that the parts of the optical system are removed, and the positions of the optical system need to be readjusted such that the laser beam reflected by the detection object can be properly incident on the photodiode. This adjustment of the parts entails extra work.

One aspect is to provide an electronic device with which adjustment can be easily performed such that a laser beam reflected by a detection object is properly incident on a light detector even after the assembly of the electronic device.

In view of the state of the known technology, an electronic device is provided that includes a laser beam scanner, a light detector, a mirror, and an adjuster. The laser beam scanner is configured to scan a laser beam over a projection surface. The light detector is configured to detect the laser beam that has been scanned by the laser beam scanner and reflected by a detection object. The mirror is arranged to reflect the laser beam that has been reflected by the detection object toward the light detector. The adjuster is arranged to adjust at least one of inclination of the mirror and position of the mirror with respect to the light detector such that incident position of the laser beam on the light detector is adjusted.

Also other objects, features, aspects and advantages of the present disclosure will become apparent to those skilled in the art from the following detailed description, which, taken in conjunction with the annexed drawings, discloses one embodiment of the electronic device.

### BRIEF DESCRIPTION OF THE DRAWINGS

Referring now to the attached drawings which form a part of this original disclosure:
FIG. 1 is a perspective view of a projector in accordance with one embodiment, illustrating an usage state of the projector;
FIG. 2 is a block diagram of the configuration of a projector module of the projector illustrated in FIG. 1;
FIG. 3 is a schematic diagram of the configuration of the projector, illustrating a state in which the inclination of a mirror is adjusted in the projector;
FIG. 4 is a schematic diagram of the configuration of the projector, illustrating a state in which the position of the mirror is adjusted in the projector; and
FIG. 5 is a schematic diagram of the configuration of the projector, illustrating a state in which the inclination and the position of the mirror are adjusted in the projector.

### DETAILED DESCRIPTION OF EMBODIMENTS

A selected embodiment will now be explained with reference to the drawings. It will be apparent to those skilled in the art from this disclosure that the following descriptions of the embodiment are provided for illustration only and not for the purpose of limiting the invention as defined by the appended claims and their equivalents.

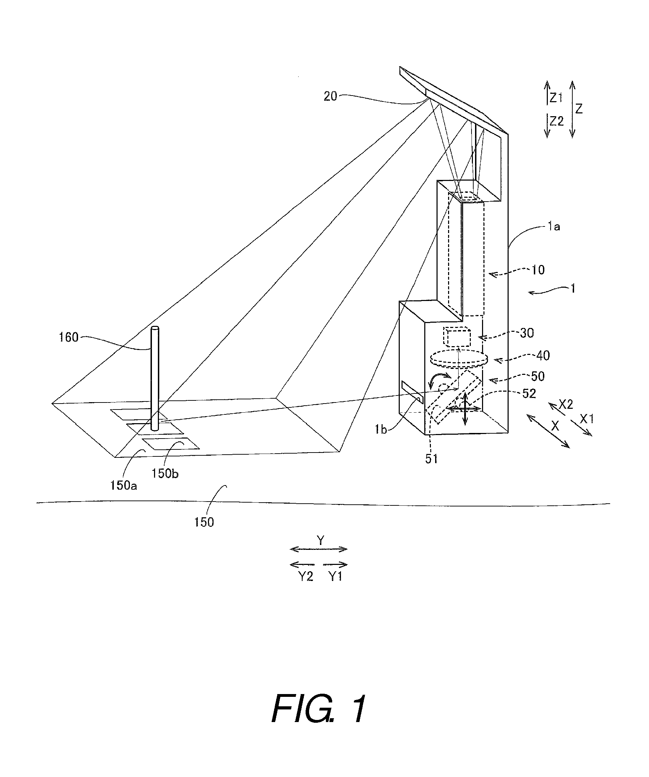

Referring to FIGS. 1 to 5, a projector 1 is illustrated in accordance with one embodiment. The projector 1 is an example of the "electronic device" or "electronic device having a projector function" of the present invention.

As shown in FIG. 1, the projector 1 is used by being disposed on a table 150 or the like. The projector 1 projects an image or video 150b of an operation button to be selected by the user onto a projection surface 150a of the table 150, for example. The projector 1 is the so-called front projector. With the projector 1, the image 150b is projected from the side viewed by the user (the Z1 direction side). The projector 1 is also configured such that the image 150b projected on the projection surface 150a is operated by touching it with the user's finger, a pen, or another such detection object 160. The projector 1 includes a projector module 10, a projecting mirror 20, a light detector 30, a converging lens 40, and a mirror 50. The projector 1 also includes on its lower side (the Z2 direction side) an opening 1b for allowing a laser beam reflected by the detection object 160 to be incident on the interior of a housing 1a. The opening 1b is provided on the projection surface 150a side (the Y2 direction side) of the housing 1a.

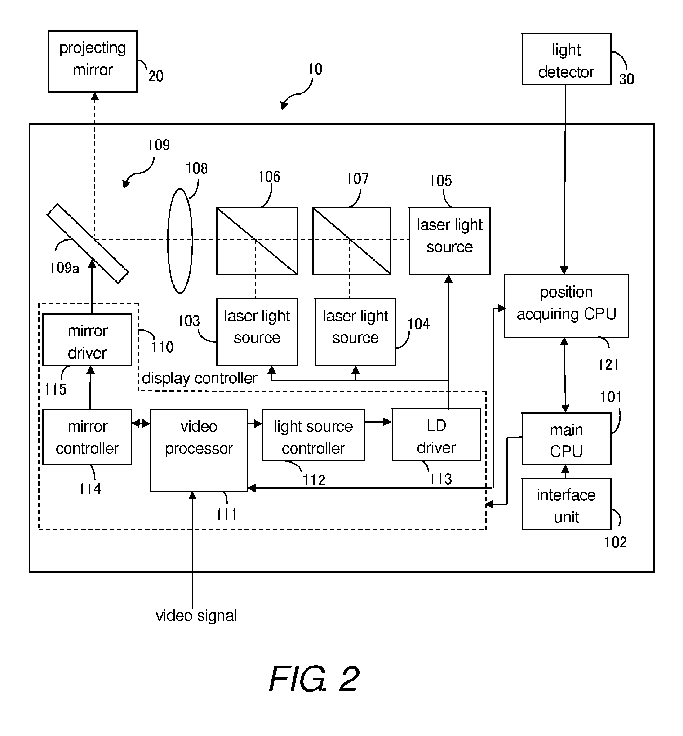

As shown in FIG. 2, the projector module 10 includes a main CPU 101, an interface unit 102, three (three colors (e.g., blue, green, and red)) laser light sources 103 to 105 , two polarizing beam splitters 106 and 107, a lens 108, a laser beam scanner 109, a display controller 110, and a position acquiring CPU 121. The laser beam scanner 109 includes a MEMS (Micro Electro Mechanical System) mirror 109a. The laser beam scanner 109 is configured such that the laser beam scans the projection surface 150a as shown in FIG. 1. The display controller 110 includes a video processor 111, a light source controller 112, an LD (laser diode) driver 113, a mirror controller 114, and a mirror driver 115. The projector module 10 is configured so as to output the image 150b based on a video signal inputted to the video processor 111. The projector module 10 is also configured so as to detect the touch position by the detection object 160 based on the laser beam detected by the light detector 30. The projector module 10 will be described in detail below.

As shown in FIG. 1, the projecting mirror 20 is disposed on the upper side (Z1 direction) of the housing 1a. The projecting mirror 20 is configured so as to reflect the image 150b outputted upward from the projector module 10, toward the projection surface 150a.

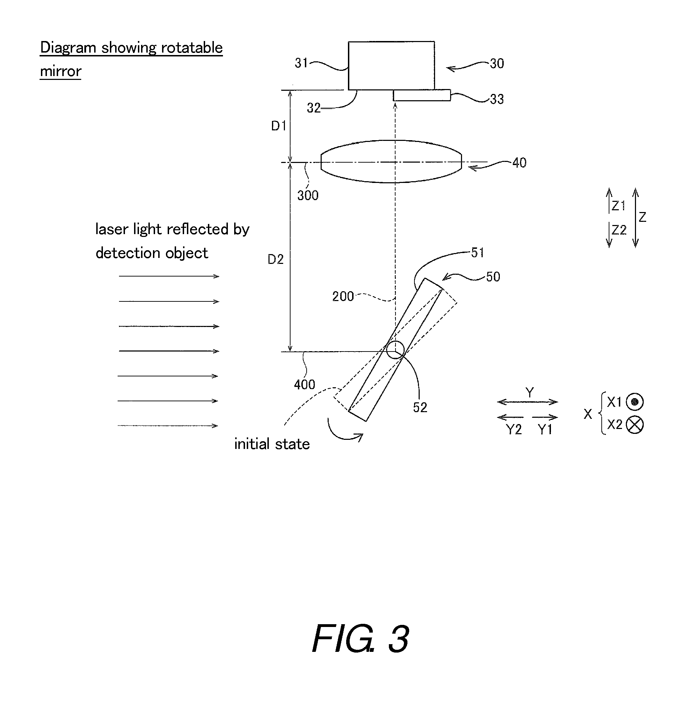

In this embodiment, the light detector 30 is configured so as to be scanned by the laser beam scanner 109 (the MEMS mirror 109a), and to detect the laser beam reflected by the detection object 160. As shown in FIGS. 3 to 5, the light detector 30 includes a main body component 31, a light incident face 32, and a mask member 33. The main body component 31 includes in its interior a photodiode for detecting a laser beam. The light detector 30 includes the light incident face 32, which is provided on the side of the light detector 30 on which the converging lens 40 is disposed (the Z2 direction side) and on which the laser beam is incident. Also, the light detector 30 is configured so as to be able to detect the laser light reflected by the detection object 160, out of the laser light emitted from the laser light sources 103 to 105 for forming the image 150b.

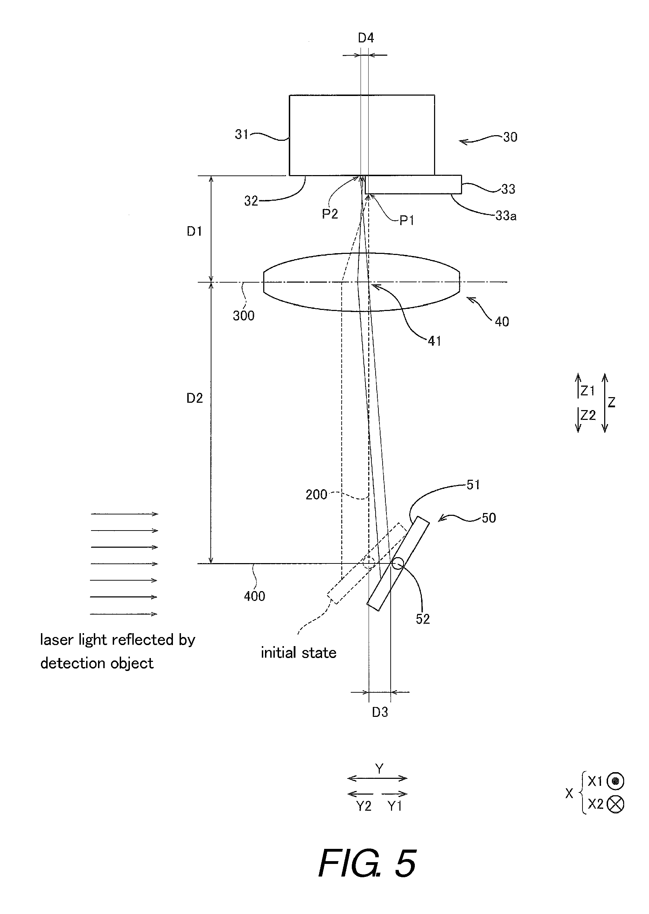

As shown in FIG. 5, the mask member 33 is disposed in a specific region of the light incident face 32 on the Y1 direction side. The mask member 33 is used for blocking the laser beam reflected by the detection object 160 located more than a specific distance away from the projection surface 150a. More specifically, the mask member 33 blocks the laser beam reflected by the detection object 160 located more than a specific distance away from the projection surface 150a. The mask member 33 is affixed to a position of the light detector 30 (the light incident face 32) so as to receive the laser beam reflected by the detection object 160 located more than a specific distance away from the projection surface 150a.

As shown in FIGS. 1 and 3 to 5, in this embodiment, the converging lens 40 is disposed at a position between the light detector 30 and the mirror 50. As shown in FIG. 5, the converging lens 40 includes a convex lens that converges the laser beam reflected by the mirror 50. The converging lens 40 is configured so as to form a focal point near the front face 33a of the mask member 33 on the Z2 direction side in a state of having been installed in the projector 1. Also, the converging lens 40 and the light detector 30 are spaced apart by a specific spacing D1. More precisely, the converging lens 40 is disposed such that a line segment 300 that passes through a nodal point 41 of the converging lens 40 and is perpendicular to an optical axis 200 is separated by the spacing D1 from the light incident face 32 of the light detector 30. The term "nodal point" here indicates a point through which the light passes without changing its angle.

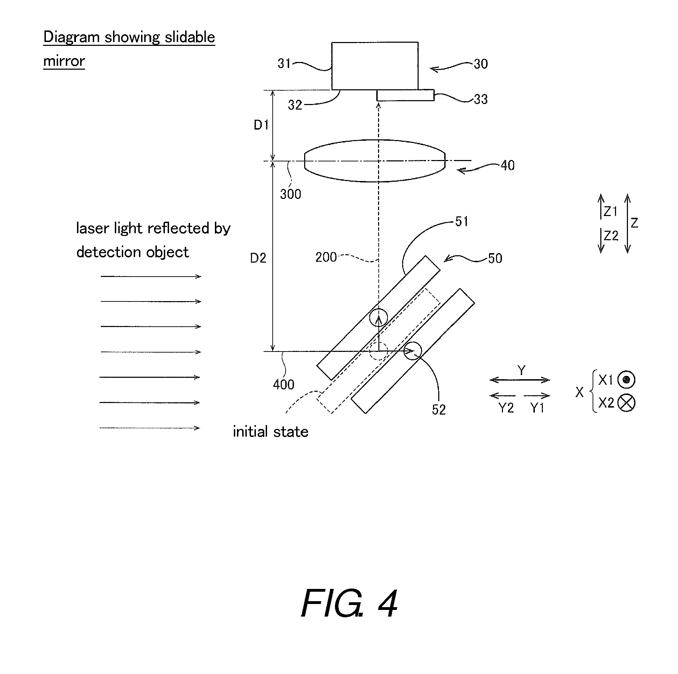

In this embodiment, the mirror 50 is configured such that the laser beam reflected by the detection object 160 will be reflected toward the light detector 30. As shown in FIG. 1, the mirror 50 is configured so as to reflect laser light that has entered the housing 1a through the opening 1b. The mirror 50 includes a reflecting face 51 and a pair of adjusting knobs 52. As shown in FIGS. 3 and 4, the mirror 50 is configured such that the relative angle of the light detector 30 with respect to the light incident face 32, and the relative position with respect to the light detector 30 can be changed. The adjusting knobs are examples of the "adjuster" of the present invention.

As shown in FIG. 1, the reflecting face 51 is formed in a specific shape (such as a substantially rectangular shape). The reflecting face 51 is disposed substantially at the front face of the opening 1b in the Y direction. The mirror 50 is configured such that the reflecting face 51 faces the detection object 160 side (the Y2 direction side). The pair of the adjusting knobs 52 is provided, at the two ends of the mirror 50 in the X direction. The adjusting knobs 52 have a substantially cylindrical shape extending in the X direction. Also, the adjusting knobs 52 are configured so as to be exposed on the outside of the housing 1a. In the usage state of the projector 1, the adjusting knobs 52 are covered by a cover member (not shown) that prevents the user's hands, etc., from touching the knobs. The cover member that covers the adjusting knobs 52 is configured such that it can be easily and instantly attached or removed.

As shown in FIG. 5, the mirror 50 is disposed such that the reflecting face 51 and the converging lens 40 are separated by a specific spacing D2 in the initial state when the mirror is inclined by 45 degrees with respect to the projection surface 150a. More precisely, the mirror 50 and the converging lens 40 are disposed such that a line segment 400 that is parallel to the light incident face 32 of the light detector 30 and passes through the center 51a of the reflecting face 51, and the line segment 300 that is perpendicular to the optical axis 200 and passes through the nodal point 41 of the converging lens 40, are separated by the spacing D2. Also, the mirror 50 is disposed such that the spacing D2 between the mirror 50 and the converging lens 40 is greater than the spacing D1 between the converging lens 40 and the light detector 30. More specifically, the spacing D2 between the mirror 50 and the converging lens 40 is two times the spacing D1 between the converging lens 40 and the light detector 30.

As shown in FIG. 1, the mirror 50, the converging lens 40, and the light detector 30 are disposed substantially on a straight line in a direction that is substantially perpendicular to the projection surface 150a (the Z direction). More specifically, the mirror 50, the converging lens 40, the light detector 30, and the projector module 10 are disposed in that order in the Z2 direction (from below) in the interior of the housing 1a. The mirror 50, the converging lens 40, the light detector 30, and the projector module 10 are disposed so as to superpose each other when viewed in the Z direction (vertically).

As shown in FIG. 3, the mirror 50 is configured such that its inclination with respect to the light detector 30 is adjusted by turning it around an axis in the X direction that is substantially parallel to the projection surface 150a (see FIG. 1). More specifically, the mirror 50 is configured to rotate with the adjusting knobs 52 serving as the rotational center. Also, the mirror 50 is configured such that the position on the light detector 30 where the laser beam is incident is adjusted by adjusting the inclination of the mirror 50 (the reflecting face 51) with respect to the light detector 30.

As shown in FIG. 4, the mirror 50 is configured such that its position with respect to the light detector 30 (the light incident face 32) is adjusted by sliding the mirror 50 in a direction (the Y direction) along the projection surface 150a (see FIG. 1) and in a direction that is substantially perpendicular to the projection surface 150a (the Z direction). The mirror 50 is configured such that the incident position of the laser beam on the light detector 30 is adjusted by adjusting the position of the mirror 50 (the reflecting face 51) with respect to the light detector 30. More precisely, the mirror 50 is configured to be adjustable by sliding such that of the light reflected by the detection object 160, the component with higher intensity will be incident on the nodal point 41 of the converging lens 40.

The projector 1 is configured such that the adjusting knobs 52 are used to adjust the incident position of the laser beam on the light detector 30 by adjusting both the position and the inclination of the mirror 50 with respect to the light detector 30. Also, the mirror 50 is configured such that the adjusting knobs 52 are used to rotate around an axis of the X direction that is substantially parallel to the projection surface 150a (see FIG. 3), and to slide in a direction along the projection surface 150a (the Y direction) and in a direction that that is substantially perpendicular to the projection surface 150a (the Z direction) (see FIG. 4). The turning and sliding of the mirror 50 with the adjusting knobs 52 can be accomplished by a well-known method (such as a configuration in which the mirror 50 is turned and slid by a positioning stage that allows two-dimensional (Y-Z directions) adjustment of the position). Alternatively, the housing 1a can include supporting slits or grooves on side faces of the housing 1a. The adjusting knobs 52 can be attached to the supporting slits or grooves such that the adjusting knobs 52 are rotatably and slidably supported by the supporting slits or grooves of the housing 1a, respectively.

As shown in FIG. 5, the projector 1 is also configured such that the incident position of the laser beam on the light detector 30 is adjusted by using the adjusting knobs 52 to adjust the position and inclination of the mirror 50 with respect to the light detector 30. More specifically, the projector 1 is configured such that the adjusting knobs 52 are used to direct the laser beam at either the light incident face 32 or the mask member 33 by adjusting the position and inclination of the mirror 50 with respect to the light detector 30. More precisely, the mirror 50 is configured such that the orientation in which the laser beam is reflected can be changed by using the adjusting knobs 52 to slide the mirror 50 in a direction along the projection surface 150a (the Y direction) and in a direction that is substantially perpendicular to the projection surface 150a (the Z direction), and by turning the mirror 50 with the adjusting knobs 52 serving as the rotational center. Here, rotating and sliding the mirror 50 moves the incident position of the laser beam by a distance D3 in the Y1 direction. Thus, the incident position of the laser beam on the light detector 30 moves by a distance D4 in the Y2 direction. Consequently, the incident position of the laser beam on the light detector 30 is adjusted from the unadjusted position P1 to the adjusted position P2, and laser light that has been undetected will be detected.

The main CPU 101 is configured so as to control the various components of the projector module 10. The interface unit 102 is provided to receive operations for switching on the power to the projector 1, operations for changing the projection angle of the image 150b, operations for changing the resolution of the image 150b, and so forth. The laser light source 103 is configured such that blue laser light will be transmitted by the polarizing beam splitter 106 and the lens 108, and shine on the MEMS mirror 109a. The laser light sources 104 and 105 are respectively configured such that green laser light and red laser light will be transmitted by the beam splitters 107 and 106 and the lens 108, and shine on the MEMS mirror 109a. The image 150b projected onto the projection surface 150a is formed by the laser light sources 103 to 105 for forming images.

The laser beam scanner 109 is configured so as to project the image 150b (see FIG. 1) onto the projection surface 150a. More specifically, the MEMS mirror 109a of the laser beam scanner 109 is configured so as to scan the laser beam emitted from the laser light sources 103 to 105 and project the image 150b onto the projection surface 150a. The MEMS mirror 109a is configured so as to scan the laser beam biaxially, in the horizontal direction and the vertical direction. The MEMS mirror 109a is also configured so as to scan the horizontal direction at high speed by resonance drive, and to scan the vertical direction at low speed by DC drive.

The video processor 111 is configured so as to control the projection of video based on video signals inputted from the outside. More specifically, the video processor 111 is configured so as to control the drive of the MEMS mirror 109a via the mirror controller 114 based on video signals inputted from the outside, and to control the emission of laser beams by the laser light sources 103 to 105 via the light source controller 112. The video processor 111 is also configured so as to correct distortion of the projected image 150b.

The light source controller 112 is configured so as to control the emission of laser beams by the laser light sources 103 to 105 by controlling the LD driver 113 based on control by the video processor 111. More specifically, the light source controller 112 is configured so as to control the emission of laser beams by the laser light sources 103 to 105 in colors corresponding to the various pixels of the image 150b at a timing that matches the scanning of the MEMS mirror 109a.

The mirror controller 114 is configured so as to control the drive of the MEMS mirror 109a by driving the mirror driver 115 based on control by the video processor 111.

In this embodiment, the position acquiring CPU 121 is configured to acquire the position of the detection object 160 based on time information about when the reflected laser beam is detected by the light detector 30, and the scanning path of the laser beam. More specifically, the position acquiring CPU 121 acquires the position of the detection object 160 corresponding to the image 150b by determining which position the detected laser beam is scanning with respect to the image 150b based on the scanning path of the laser beam and the time that has elapsed from a horizontal synchronization signal until the laser beam is detected. That is, the position acquiring CPU 121 calculates coordinates on the projection surface 150a for the detection object 160 based on the scanning position by the laser beam scanner 109 and the timing at which the laser beam reflected from the detection object 160 is detected by the light detector 30. The position acquiring CPU 121 is an example of the "controller" of the present invention.

In this embodiment, the position acquiring CPU 121 is configured so as to detect the touch position by the detection object 160 based on the laser beam detected by the light detector 30 in a state in which the incident position of the laser beam on the light detector 30 has been adjusted by using the adjusting knobs 52 to adjust the inclination and position of the mirror 50 with respect to the light detector 30.

In this embodiment, as discussed above, there are provided the mirror 50 that reflects the laser beam reflected by the detection object 160 toward the light detector 30, and the adjusting knobs 52 for adjusting the incident position of the laser beam on the light detector 30 by adjusting the inclination and/or position of the mirror 50 with respect to the light detector 30. Consequently, even if the laser beam reflected by the user's finger or a pointer (the detection object 160) cannot be properly incident on the light detector 30 due to the layout precision of the optical system, such as the mirror 50 and the light detector 30, the incident position of the laser beam on the light detector 30 can be easily adjusted by using the adjusting knobs 52 to adjust the inclination and/or the position of the mirror 50 with respect to the light detector 30 such that the laser beam reflected by the detection object 160 will be properly incident on the light detector 30. As a result, even after the assembly of the projector 1, the laser beam reflected by the detection object 160 can be easily adjusted to be properly incident on the light detector 30, allowing the input operation by the user to be accurately detected.

Also, in this embodiment, as discussed above, the converging lens 40, which converges the laser beam reflected by the mirror 50, is provided at a position between the light detector 30 and the mirror 50. The spacing D2 between the mirror 50 and the converging lens 40 is greater than the spacing D1 between the converging lens 40 and the light detector 30. Consequently, the amount of adjustment (the amount of movement) of the incident position of the laser beam on the light detector 30 with respect to the amount of movement of the mirror 50 can be reduced. This makes it easier to adjust the incident position of the laser beam on the light detector 30 after assembly of the projector 1.

Also, in this embodiment, as discussed above, the mirror 50, the converging lens 40, and the light detector 30 are disposed substantially on a straight line in a direction substantially perpendicular to the projection surface 150a. Consequently, the layout surface area of the projector 1 can be made smaller.

Also, in this embodiment, as discussed above, the mirror 50 is configured such that its inclination with respect to the light detector 30 is adjusted by using the adjusting knobs 52 to rotate the mirror around an axis that is substantially parallel to the projection surface 150a. The inclination of the mirror 50 with respect to the light detector 30 is adjusted by the adjusting knobs 52 to adjust the position where the laser beam is incident on the light detector 30. Consequently, the orientation of the laser beam can be easily changed by adjusting the inclination of the mirror 50 with the adjusting knobs 52. This makes it easier to adjust the incident position of the laser beam on the light detector 30 after assembly of the projector 1.

Also, in this embodiment, as discussed above, the mirror 50 is configured such that its position with respect to the light detector 30 is adjusted by using the adjusting knobs 52 to slide the mirror in a direction along the projection surface 150a, or in at least one of the directions substantially perpendicular to the projection surface 150a. The position where the laser beam is incident on the light detector 30 is adjusted by using the adjusting knobs 52 to adjust the position of the mirror 50 with respect to the light detector 30. Consequently, the incident state of the laser beam reflected by the detection object 160 (scattered light that has been scattered in a plurality of directions) can be easily changed by sliding the mirror 50. This makes it easier to adjust the incident position of the laser beam on the light detector 30 after assembly of the projector 1.

Also, in this embodiment, as discussed above, the incident position of the laser beam on the light detector 30 is adjusted with the adjusting knobs 52. Consequently, the position and/or the inclination of the mirror 50 with respect to the light detector 30 can be easily adjusted with the adjusting knobs 52.

Also, in this embodiment, as discussed above, the mask member 33 is used for blocking the laser beam reflected by the detection object 160 located more than a specific distance away from the projection surface 150a. The mask member 33 is disposed in a specific region of the light incident face 32 of the light detector 30. The adjusting knobs 52 are used to adjust the inclination and/or the position of the mirror 50 with respect to the 30 such that the laser beam is directed at either the light incident face 32 or the mask member 33. Consequently, even if the layout positions of the optical system have to be readjusted after the mask member 33 has been disposed for blocking the laser beam, the incident position of the laser beam on the light detector 30 can be adjusted by using the adjusting knobs 52. As a result, the mask member 33 does not have to be installed again. Thus, even when the mask member 33 is provided, the laser beam reflected by the detection object 160 after assembly of the projector 1 can be easily adjusted to be properly incident on the light detector 30, allowing the input operation by the user to be accurately detected.

Also, in this embodiment, as discussed above, it is preferable if the position acquiring CPU 121 is provided for detecting the touch position by the detection object 160 based on the laser beam detected by the light detector 30 in a state in which the incident position of the laser beam on the light detector 30 has been adjusted by adjusting the inclination and/or the position of the mirror 50 with respect to the light detector 30 by means of the adjusting knobs 52. Consequently, the touch position by the detection object 160 can be detected by the position acquiring CPU 121 in a state in which the incident position of the laser beam on the light detector 30 has been adjusted with the adjusting knobs 52. Thus, input operations by the user can be accurately detected.

The embodiment disclosed herein is just an example in every respect, and should not be interpreted as being limiting in nature. The scope of the invention being indicated by the appended claims rather than by the above description of the embodiments, all modifications within the meaning and range of equivalency of the claims are included.

For example, in the above embodiment, the present invention is applied to a projector. However, the present invention is not limited to this. The present invention can be applied, for example, to an electronic device having a projector function other than a projector itself, such as a smart phone.

Also, in the above embodiment, the incident position of the laser beam on the light detector is adjusted by adjusting both the position and the inclination of the mirror with respect to the light detector. However, the present invention is not limited to this. With the present invention, the incident position of the laser beam on the light detector can instead be adjusted by adjusting just the inclination or the position of the mirror with respect to the light detector.

Also, in the above embodiment, the mirror is disposed such that the spacing between the mirror and the converging lens is two times the spacing between the converging lens and the light detector. However, the present invention is not limited to this. With the present invention, as long as the spacing between the mirror and the converging lens is greater than the spacing between the converging lens and the light detector, the mirror can be disposed such that the spacing is something other than two times the spacing between the converging lens and the light detector.

Also, in the above embodiment, the detection object is detected using a laser beam for forming an image. However, the present invention is not limited to this. With the present invention, the detection object can be detected using a dedicated laser beam for detecting a separate detection object from that of the laser beam used for forming an image. Furthermore, a laser light source that emits infrared rays, for example, can be used for the laser light source that emits a dedicated laser beam for detecting a detection object.

Also, in the above embodiment, the adjusting knobs (e.g., the adjusters) exposed on the outside of the housing are covered by a cover member. However, the present invention is not limited to this. With the present invention, an adjuster that is not exposed on the outside of the housing can be provided, and the adjuster operated by using a screwdriver or other such tool that is inserted into the interior from the outside of the housing. Consequently, even when no cover member is provided to cover the adjuster, the user's hands, etc., can be kept from coming into contact with the adjuster and accidentally changing the incident position of the laser beam on the light detector that has been properly adjusted while the projector is used.

Also, in the above embodiment, the present invention is applied to a projector that projected an image from the side viewed by the user (the Z1 direction side). However, the present invention is not limited to this. The present invention can also be applied to a rear projector with which an image is projected form the opposite side from the side viewed by the user.

The electronic device includes a laser beam scanner, a light detector, a mirror, and an adjuster. The laser beam scanner is configured to scan a laser beam over a projection surface. The light detector is configured to detect the laser beam that has been scanned by the laser beam scanner and reflected by a detection object. The mirror is arranged to reflect the laser beam that has been reflected by the detection object toward the light detector. The adjuster is arranged to adjust at least one of inclination of the mirror and position of the mirror with respect to the light detector such that incident position of the laser beam on the light detector is adjusted.

With the electronic device, as mentioned above, there are provided the mirror that reflects the laser beam reflected by the detection object toward the light detector, and the adjuster that adjusts the inclination and/or the position of the mirror with respect to the light detector, thereby adjusting the incident position of the laser beam on the light detector. Thus, even if the laser beam reflected by the detection object, such as the user's finger or a pointer, cannot be properly incident on the light detector due to the layout precision of the optical system, such as the mirror or the light detector, the incident position where the laser beam is incident on the light detector can be easily adjusted by using the adjuster to adjust the inclination and/or the position of the mirror with respect to the light detector. Thus, the laser beam reflected by the detection object can be properly incident on the light detector. Consequently, even after the assembly of the electronic device (e.g., the projector), the laser beam reflected by the detection object can be easily adjusted such that it is properly incident on the light detector. This allows the input operation by the user to be accurately detected.

With the electronic device, the electronic device further includes a converging lens that is arranged to converge the laser beam reflected by the mirror. The conversing lens is disposed between the light detector and the mirror such that a spacing between the mirror and the converging lens is greater than a spacing between the converging lens and the light detector. With this configuration, the amount of adjustment (or the amount of movement) of the incident position of the laser beam on the light detector with respect to the amount of movement of the mirror can be reduced. This makes it easier to adjust the incident position of the laser beam on the light detector after assembly of the electronic device (e.g., the projector).

With the electronic device, the mirror, the converging lens, and the light detector are aligned along a straight line (e.g., the optical axis 200) extending substantially perpendicular to the projection surface. With this configuration, the layout surface area of the electronic device (e.g., the projector) can be smaller than when the mirror, the converging lens, and the light detector are aligned along a straight line extending substantially parallel to the projection surface.

With the electronic device, the adjuster is arranged to adjust the inclination of the mirror with respect to the light detector by rotating the mirror around an axis substantially parallel to the projection surface such that the incident position of the laser beam on the light detector is adjusted. With this configuration, the orientation of the laser beam can be easily changed by adjusting the inclination of the mirror with the adjuster. This makes it easier to adjust the incident position of the laser beam on the light detector after assembly of the electronic device (e.g., the projector).

With the electronic device, the adjuster is arranged to adjust the position of the mirror with respect to the light detector by sliding the mirror in at least one of a direction along the projection surface and a direction substantially perpendicular to the projection surface such that the incident position of the laser beam on the light detector is adjusted. With this configuration, the incident state of the laser beam reflected by the detection object (scattered light that has been scattered in a plurality of directions) can be easily changed by sliding the mirror with the adjuster. This makes it easier to adjust the incident position of the laser beam on the light detector after assembly of the electronic device (e.g., the projector).

With the electronic device, the adjuster includes an adjusting knob. The adjusting knob is operated to adjust the one of the inclination of the mirror and the position of the mirror with respect to the light detector such that the incident position of the laser beam on the light detector is adjusted. With this configuration, the inclination and/or the position of the mirror with respect to the light detector can be easily adjusted with the adjusting knob.

With the electronic device, the electronic device further includes a converging lens and a mask member. The converging lens is arranged to converge the laser beam reflected by the mirror. The converging lens is disposed between the light detector and the mirror. The mask member is arranged to block the laser beam reflected by the detection object that is spaced from the projection surface by a distance greater than a specific distance. The mask member is disposed on a light incident face of the light detector that faces with the converging lens such that the laser beam is incident on the light incident face. The adjuster is arranged to adjust the one of the inclination of the mirror and the position of the mirror with respect to the light detector such that the laser beam is directed towards one of the light incident face and the mask member. With this configuration, even if the layout positions of the optical system have to be readjusted after the mask member has been disposed for blocking the laser beam, the incident position of the laser beam on the light detector can be adjusted by using the adjuster to adjust the inclination and/or the position of the mirror with respect to the light detector. Consequently, the mask member does not have to be installed again. Thus, even when the mask member is provided, the laser beam reflected by the detection object after assembly of the electronic device (e.g., the projector) can be easily adjusted to be properly incident on the light detector. This allows the input operation by the user to be accurately detected.

With the electronic device, the electronic device further includes a controller that is configured to detect a touch position of the detection object based on the laser beam detected by the light detector while the adjuster adjusts the one of the inclination of the mirror and the position of the mirror with respect to the light detector such that the incident position of the laser beam on the light detector is adjusted. With this configuration, the touch position of the detection object is detected by the controller in a state in which the incident position of the laser beam on the light detector has been adjusted by the adjuster. Thus, the input operation by the user can be correctly detected.

With the electronic device, the electronic device further includes a projecting mirror arranged to reflect over the projection surface the laser beam that has been outputted from the laser beam scanner away from the projection surface (e.g., the Z1 direction in FIG. 1).

With the electronic device, the electronic device further includes a housing accommodating at least the laser beam scanner and the light detector inside thereof. The laser beam scanner is disposed above the light detector (e.g., the Z1 direction in FIG. 1) inside the housing.

With the electronic device, the electronic device has a projection function.

With the present invention, as discussed above, even after the assembly of the electronic device, such as the projector 1 or other electronic device with projection function, the laser beam reflected by the detection object can be easily adjusted to be properly incident on the light detector.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts unless otherwise stated.

As used herein, the following directional terms "frame facing side", "non-frame facing side", "forward", "rearward", "front", "rear", "up", "down", "above", "below", "upward", "downward", "top", "bottom", "side", "vertical", "horizontal", "perpendicular" and "transverse" as well as any other similar directional terms refer to those directions of a projector in an upright position. Accordingly, these directional terms, as utilized to describe the projector should be interpreted relative to a projector in an upright position on a horizontal surface.

Also it will be understood that although the terms "first" and "second" may be used herein to describe various components these components should not be limited by these terms. These terms are only used to distinguish one component from another. Thus, for example, a first component discussed above could be termed a second component and vice-a-versa without departing from the teachings of the present invention. The term "attached" or "attaching", as used herein, encompasses configurations in which an element is directly secured to another element by affixing the element directly to the other element; configurations in which the element is indirectly secured to the other element by affixing the element to the intermediate member(s) which in turn are affixed to the other element; and configurations in which one element is integral with another element, i.e. one element is essentially part of the other element. This definition also applies to words of similar meaning, for example, "joined", "connected", "coupled", "mounted", "bonded", "fixed" and their derivatives. Finally, terms of degree such as "substantially", "about" and "approximately" as used herein mean an amount of deviation of the modified term such that the end result is not significantly changed.

While only a selected embodiment has been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiment according to the present invention are provided for illustration only, and not for the purpose of limiting the invention as defined by the appended claims and their equivalents.

## Claims

1. An electronic device comprising:
a laser beam scanner configured to scan a laser beam over a projection surface;
a light detector configured to detect the laser beam that has been scanned by the laser beam scanner and reflected by a detection object;
a mirror arranged to reflect the laser beam that has been reflected by the detection obj ect toward the light detector; and
an adjuster arranged to adjust at least one of inclination of the mirror and position of the mirror with respect to the light detector such that incident position of the laser beam on the light detector is adjusted.

2. The electronic device according to claim 1, further comprising
a converging lens arranged to converge the laser beam reflected by the mirror, the converging lens being disposed between the light detector and the mirror such that a spacing between the mirror and the converging lens is greater than a spacing between the converging lens and the light detector.

3. The electronic device according to claim 2, wherein
the mirror, the converging lens, and the light detector are aligned along a straight line extending substantially perpendicular to the projection surface.

4. The electronic device according to any one of claims 1 to 3, wherein
the adjuster is arranged to adjust the inclination of the mirror with respect to the light detector by rotating the mirror around an axis substantially parallel to the projection surface such that the incident position of the laser beam on the light detector is adjusted.

5. The electronic device according to any one of claims 1 to 4, wherein
the adjuster is arranged to adjust the position of the mirror with respect to the light detector by sliding the mirror in at least one of a direction along the projection surface and a direction substantially perpendicular to the projection surface such that the incident position of the laser beam on the light detector is adjusted.

6. The electronic device according to any one of claims 1 to 5, wherein
the adjuster includes an adjusting knob, and
the adjusting knob is operated to adjust the one of the inclination of the mirror and the position of the mirror with respect to the light detector such that the incident position of the laser beam on the light detector is adjusted.

7. The electronic device according to any one of claims 1 to 6, further comprising
a converging lens arranged to converge the laser beam reflected by the mirror, the converging lens being disposed between the light detector and the mirror, and
a mask member arranged to block the laser beam reflected by the detection object that is spaced from the projection surface by a distance greater than a specific distance, the mask member being disposed on a light incident face of the light detector that faces with the converging lens such that the laser beam is incident on the light incident face,
the adjuster being arranged to adjust the one of the inclination of the mirror and the position of the mirror with respect to the light detector such that the laser beam is directed towards one of the light incident face and the mask member.

8. The electronic device according to any one of claims 1 to 7, further comprising
a controller configured to detect a touch position of the detection object based on the laser beam detected by the light detector while the adjuster adjusts the one of the inclination of the mirror and the position of the mirror with respect to the light detector such that the incident position of the laser beam on the light detector is adjusted.

9. The electronic device according to any one of claims 1 to 8, further comprising
a projecting mirror arranged to reflect over the projection surface the laser beam that has been outputted from the laser beam scanner away from the projection surface.

10. The electronic device according to any one of claims 1 to 9, further comprising
a housing accommodating at least the laser beam scanner and the light detector inside thereof,
the laser beam scanner being disposed above the light detector inside the housing.

11. The electronic device according to any one of claims 1 to 10, wherein
the electronic device has a projection function.
